# EUROPÄISCHE PATENTSCHRIFT

(11) **EP 2 744 762 B1**
(45) Veröffentlichungstag und Bekanntmachung des Hinweises auf die Patenterteilung: **15.11.2017**
(21) Anmeldenummer: 12759027.1
(22) Anmeldetag: 17.08.2012
(51) Int. Cl.: C03C 17/30, C03C 17/00, A61J 1/05, C08G 18/28, C08G 18/80, C09D 175/04, C08G 18/50, C08G 18/71

(54) **VERFAHREN ZUR HERSTELLUNG VON BESCHICHTETEN GLASOBERFLÄCHEN UND DADURCH HERGESTELLTE GLASGEFÄSSE**
METHOD FOR PRODUCING COATED GLASS SURFACES AND GLASS CONTAINERS MADE THEREWITH
PROCÉDÉ DE FABRICATION DE SURFACES EN VERRE REVÊTUES ET VERRES CREUSES FABRIQUÉS EN UTILISANT CECI

(30) Priorität: 19.08.2011 DE 102011081260
(43) Veröffentlichungstag der Anmeldung: 25.06.2014
(73) Patentinhaber: Freie Universität Berlin, 14195 Berlin (DE)
(72) Erfinder: HAAG, Rainer, 12209 Berlin (DE); WEINHART, Marie, 10245 Berlin (DE); BECHERER, Tobias, 10997 Berlin (DE); FRIESS, Wolfgang, 82393 lffeldorf (DE); HEDTRICH, Sarah, 81369 München (DE); HÖGER, Kerstin, 80686 München (DE); SCHEDLER, Uwe, 15366 Neuenhagen (DE)
(74) Vertreter: Gulde & Partner
(86) Internationale Anmeldenummer: PCT/EP2012/066094
(87) Internationale Veröffentlichungsnummer: WO 2013/026795

(56) Entgegenhaltungen:
- DE-A1- 10 311 163
- DE-A1-102006 027 125
- M. WEINHART ET AL.: "Linear poly(methyl glycerol) and linear polyglycerol as potent protein and cell resistant alternatives to poly(ethylene glycol)", CHEMISTRY - AN ASIAN JOURNAL, Bd. 5, Nr. 9, September 2010 (2010-09), Seiten 1992-2000, XP008158617, DOI: 10.1002/asia.201000127 in der Anmeldung erwähnt

## Beschreibung

Die Erfindung betrifft ein Verfahren zur Herstellung von beschichteten Glasoberflächen, insbesondere von Glasgefäßen, die vorzugsweise für die Verpackung von Biopharmazeutika und andere pharmazeutische und biologische Materialien eingesetzt werden. Dazu gehören Materialien, wie Zellen, Bakterien oder Viren, oder Lösungen von Biomolekülen (z.B. Proteine, Enzyme, DNS) oder Arzneistoffen und z.B. in der Medizin, Biotechnologie oder Pharmazie Verwendung finden. Gegenstand der Erfindung sind auch entsprechend modifizierte Glasgefäße und Glasgerätschaften zur Handhabung von Biomolekülen oder biologischen Materialien. Erfindungsgemäß werden spezielle Silyl-modifizierte Polyglycerole, zur Oberflächenmodifizierung des Glases verwendet, vorzugsweise auf den Kontaktflächen von Glasgefäßen bzw. Gerätschaften. Insbesondere erlaubt das erfindungsgemäße Verfahren die Bereitstellung einer hitzesterilisationsfesten bzw. autoklavierbaren Antihaftbeschichtung auf Glasflächen für Biopharmazeutika.

### Stand der Technik

Glasgefäße zählen zu den bislang am häufigsten eingesetzten Verpackungsmaterialien für Biomoleküle wie z.B. Protein-basierte Pharmazeutika. Dies ist begründet zum Einen durch kostengünstige Herstellung von Glas sowie zum Anderen durch zahlreichen vorteilhaften chemischen und physikalischen Eigenschaften dieses Materials wie z.B. hohe (Temperatur-) Stabilität und chemische Beständigkeit, Hydrophilie des Materials, nicht-toxische Eigenschaften, Unpermeabilität gegenüber Gasen, sowie die Anwendbarkeit verschiedener Sterilisationsverfahren ohne Zersetzung des Materials. Basierend auf variabler Glaszusammensetzung resultieren verschiedene Glasqualitäten, die sich hauptsächlich in der hydrolytischen Resistenz des Glases unterscheiden, was unterschiedlich starkes Ausdiffundieren von (Alkali-, Erdalkali-) Metallionen aus dem Glas in die Lösung zur Folge haben kann, wodurch wiederum die Stabilität und Funktionalität von Biomolekülen maßgeblich beeinträchtigt werden kann. Zudem sind Glasoberflächen unter physiologischen pH-Wert Bedingungen von Natur aus negativ geladen und begünstigen daher die nicht-spezifische Adsorption von Proteinen auf der Gefäßwand über hauptsächlich ionische Wechselwirkungen. Derartige Adsorptionsprozesse sind in der Regel irreversibel und führen zum "Verlust" der Biomoleküle auf der Gefäßwand.

In der Biotechnologie, Pharmaindustrie und dem Bereich "health care und life science" ist dieses Problem der Adsorption von Substanzen, insbesondere von Biomolekülen, lange bekannt, jedoch bislang unzureichend mittels geeigneter Lösungsansätze und vor allem kommerziell erhältlicher Produkte adressiert.

Die Firma Schott bietet seit einiger Zeit eine kommerzielle Variante von Glasgefäßen für "Biopharmaceuticals" an, welche verbesserte biokompatible/bioinerte Eigenschaften aufweisen soll. Diese Glasgefäße sind mittels eines "Plasma Impulse Chemical Vapor Deposition" Verfahrens mit einer etwa 100-200 nm dicken, kovalent angebundenden, reinen Quarzglas (SiO₂)-Schicht ausgekleidet (DE 196 22 550 A1).

Im Vergleich zu Standardglas vermag eine solche Beschichtung zwar das Ausdiffundieren bestimmter Metallionen aus dem Glasmaterial in die Lösung und damit einhergehende pH-Wert-Änderungen der Lösung sowie Metallionen-induzierte Denaturierung von Biomolekülen verhindern, jedoch nicht die nicht-spezifische Adsorption von Biomolekülen. Auch die aufgebrachte Quarzglasschicht ist wie unbeschichtetes Glas unter physiologischen Bedingungen negativ geladen, so dass auch zwischen einer solchen Schicht und pharmazeutischen sowie biotechnologischen Substanzen, Materialien oder Formulierungen adhäsive elektrostatische Wechselwirkungen auftreten.

Auch Kunststoffbeschichtungen, z.B. Polyethylenglykol-Derivate (PEG) finden gegenwärtig weite Verbreitung bei der Beschichtung von biomedizinischen Geräten (J. Blümmel et al., Biomaterials, 28 (2007) 4739-4747). Jedoch sind diese Derivate oxidationsempfindlich und erlauben somit keine Hitzesterilisation bei Temperaturen > 200 °C, welche zur Entpyrogenisierung von Oberflächen zwingend notwendig sind. Entpyrogenisierte Gefäße zur Lagerung von Biopharmazeutika sind insbesondere dann wichtig, wenn die gelagerte Zubereitung für eine spätere intravenöse Applikation gedacht ist. Eine Beschichtung mit PEG ist technisch aufwändig, da in der Regel unter Schutzgasatmosphäre gearbeitet werden muss, um den Ausschluss von Feuchtigkeit zu gewährleisten. Das erfordert darüber hinaus auch das Arbeiten mit schlecht mit Wasser mischbaren Lösungsmitteln, z.B. Toluol, welches gesundheitsschädlich ist.

### Beschreibung der Erfindung

Die Aufgabe der Erfindung bestand deshalb darin, geeignete Materialien für eine Antihaftbeschichtung zu finden und so bereitzustellen, dass die Beschichtung den Anforderungen auf dem Gebiet der Medizin und Pharmazie genügt, eine Adsorption von Biomolekülen oder biologischen Materialien komplett oder zumindest maßgeblich verhindert wird, und die beschichteten Glasoberflächen typischen pharmazeutischen und biologischen Sterilisationsbedingungen ausgesetzt werden können, ohne dass die Antihaftschicht in ihrer Funktion beeinträchtigt wird. Weiterhin sollen technisch einfache Beschichtungsverfahren zur Anwendung kommen, die keine Inertgasbedingungen erfordern.

Die Lösung der Aufgabe gelingt durch einer Beschichtung mit Silyl-modifizierten Polymeren auf Glycerolbasis an chemisch aktivierte Glasoberflächen, wobei der Silyl-Linker über eine Harnstoffbindung an die Polyglycerole gebunden vorliegt. Diese Silyl-modifizierten Polymere bilden eine kovalent gebundene Beschichtung an der Glasoberfläche vorzugsweise in Form einer Monolage oder Multilage, die die Eigenschaft einer Antihaftschicht gegenüber Biomolekülen und biologischen Materialien besitzt und die gleichzeitig das Autoklavieren und/oder eine Hitzesterilisation übersteht, ohne dass ihre Funktion beeinträchtigt ist.

Silyl-Linker, die erfindungsgemäß Verwendung finden, sind ausgewählt aus der Gruppe bestehend aus Trialkoxysilyl, Dialkoxyalkylsilyl und Monoalkoxydialkylsilyl. Alkyl und Alkoxy umfassen vorzugsweise 1 bis 6 C-Atome. Besonders bevorzugt ist ein Triethoxysilyl-Linker.

Vorzugsweise weisen die beschichteten Oberflächen einen statischen Wasser-Kontaktwinkel von ≤ 50° besonders bevorzugt ≤ 30° auf.

Besonders bevorzugt werden hochverzweigte Polyglycerole (HPG(OH) bzw. hochverzweigte, methylierte HPG(OMe) erfindungsgemäß verwendet. Aber auch lineare, methylierte Polyglycerole (LPG(OMe)) oder lineare Polyglycerole (LPG(OH)) können erfindungsgemäß Verwendung finden.

Die Herstellung von HPGs und LPGs sowie deren proteinresistente Eigenschaften sind an sich bekannt. So kann z.B. HPG(OH) mittels einer anionischen Ring-öffnenden Polymerisation gemäß A. Sunder, R. Mühlhaupt, R. Haag, H. Frey, Adv. Mater. 2000, 12, 235 oder R. K. Kainthan, E. B. Muliawan, S. G. Hatzikiriakos and. D. E. Brooks, Macromolecules 2006, 39, 7708. synthetisiert werden während HPG(OMe) durch polymeranaloge Methylierung der terminalen OH-gruppen von HPG(OH) mit Methyliodid, wie sie dem Fachmann in der organischen Synthese bekannt ist, zugänglich ist. Die Herstellung von LPG(OMe) und LPG(OH) ist z.B. in US 2005/0113560 A1 oder DE 10 2006 027 125 A1 beschrieben.

Es hat sich gezeigt, dass mit Polyglycerolen, die eine Harnstoffbindung zu einem Silyl-Linker aufweisen und über diesen Linker kovalent an aktivierte Glasoberflächen gekoppelt werden können, eine Beschichtung der Glasoberfläche auch ohne normalerweise erforderliche Schutzgasatmosphäre möglich ist, was das Beschichtungsverfahren erheblich vereinfacht, vor allem hinsichtlich eines sogenannten Up-Scaling Prozesses. Das Schutzgas verhindert normalerweise die unerwünschte wässrige Hydrolyse der Silylgruppen und deren anschließende Quervernetzung. Es wurde überraschend festgestellt, dass, wenn anstelle der ansonsten verwendeten aprotischen, unpolaren Lösungsmittel (z.B. Toluol), die eine geringe Wasseraffinität besitzen und somit ein wasserfreies Arbeiten erleichtern, gemäß der Erfindung ein polares protisches Lösungsmittel wie zum Beispiel primäre, niedrige Alkohole (Ethanol, Methanol etc.) verwendet werden, mit den erfindungsgemäß verwendeten Silyl-modifizierten Polyglycerinen auf Schutzgasatmosphäre während der Beschichtung verzichtet werden kann.

Das erfindungsgemäße Verfahren ist dadurch gekennzeichnet, dass erfindungsgemäß verwendete Silyl-modifizierte Polyglycerole, vorzugsweise von HPG(OH), HPG(OMe), LPG(OMe) und LPG(OH), aus entsprechenden Mono-amin-funktionalisierten Precursor-Polyglycerolen durch Umsetzung mit den entsprechenden Silylpropylisocyanaten, [3-(Trialkoxy)silyl-propylisocyanat, 3-(Dialkoxyalkyl)silyl- propylisocyanat oder 3-(Monoalkoxydialkyl)silyl-propylisocyanat, vorzugsweise 3-(Triethoxysilyl)propylisocyanat] synthetisiert werden. Der Silyl-Rest wird so über eine stabile Harnstoffbindung an das Polyglycerol gebunden. Die so modifizierten Polyglycerole werden in einem Schritt an aktivierte Glasoberflächen gekoppelt.
Die Reinigung und Aktivierung der Glasoberflächen erfolgt z.B. durch eine 30 minütige Piranha Vorbehandlung oder Plasmaaktivierung, so dass reaktive Hydroxylgruppen an der Glasoberfläche entstehen. Anschließend können die so aktivierten Oberflächen z.B. mit Wasser und/oder einem Alkohol gewaschen und getrocknet werden. Die aktivierten Gefäße werden umgehend für den Silanisierungsprozess eingesetzt, wobei das Silyl-modifizierte Polyglycerol in einem polaren, organischen Lösungsmittel oder Lösungsmittelgemisch, vorzugsweise ein primärer Alkohol, gelöst wird und unter Erwärmen auf bevorzugte Temperaturen von 40 - 100°C zugegeben wird, ggf. in Anwesenheit einer katalysierend wirkenden organischen Base. Bevorzugt verwendete Alkohole sind Methanol, Ethanol, Propanol und/oder Butanol.

Verfahren zur Beschichtung sind dem Fachmann bekannt. So kann die Beschichtung durch Sprühen, Eintauchen, (Plasma-vermittelte) chemische Dampfbeschichtung, Verdampfen oder Sputtern auf die Oberfläche aufgebracht werden, wobei die Silan-Gruppen mit der aktivierten Oberfläche reagieren und kovalent gebunden werden.

Nichtgebundene Polymermoleküle mit nicht reagierten Silangruppen können z.B. durch Waschen mit dem organischen Lösungsmittel im Anschluss entfernt werden. Eine sich anschließende Temperaturnachbehandlung auf vorzugsweise 80 bis 120°C führt zur finalen Quervernetzung der oberflächengebunden Oxysilane und gewährleistet die feste kovalente Anbindung der Polyglycerol-Schicht als Monolayer (einstufige Schicht) oder auch als Multilayer mit Schichtdicken zwischen 1-1000 nm.
Die bevorzugte Schichtdicke liegt zwischen 1-15 nm für Monolagen und 50-200 nm für Multilagen.

Vorzugsweise werden zur Beschichtung mit Monolagen geringere Konzentrationen an z.B. Triethoxysilan-modifizierten Polymeren mit statistisch einem Triethoxysilan-Linker vorzugsweise 30-33•10⁻² µM pro mm², verwendet als für Beschichtungen mit Multilagen. Alternativ kann zur Beschichtung mit Multilagen auch die statistische Modifizierung der Polymere mit den entsprechenden Silylgruppen erhöht werden auf vorzugsweise 5-25% Modifizierung der Hydroxylgruppen mit Oberflächen-reaktiven Silylgruppen pro Polymer.

Eine so gewonnene pharmataugliche Antihaftschicht offenbart statische Kontaktwinkel zu Wasser, die bevorzugt zwischen 0° und 30° liegen für den Fall der stark hydrophilen Polymere HPG(OH) und LPG(OH) und zwischen 40° und 50° für die mehr hydrophoben Polymere HPG(OMe) und LPG(OMe). Sie übersteht eine Autoklavierung bei ca. 120°C für ca. 20 Minuten und/oder eine Hitzesterilisation von z.B. mindestens 180°C für ca. 120 Minuten bzw. eine Entpyrogenisierung bei Temperaturen ≥ 200 °C für ca. 30 Minuten.

Entscheidend für die Anwendbarkeit derartig beschichteter Glasoberflächen ist die Möglichkeit der Sterilisation dieser mittels standardisierter Sterilisationsverfahren wie z.B. Hitzesterilisation (2 Stunden, 180°C) oder zur Entpyrogenisierug (0.5 Stunden, ≥ 200 °C) oder Dampfdrucksterilisation (15-20 Minuten bei 121 °C und 1 oder 2 bar autoklaviert).

Glas im Sinne der Erfindung schließt neben den an sich bekannten Silikatgläsern wie z.B Borosilikatglas und Kalknatronglas auch silanisierte oder mit Quarzglas-beschichtete Oberflächen ein sowie Siliziumbasierte organische Gläser und andere Polymere auf Siliziumbasis wie z.B. Polydimethylsiloxan (PDMS).

Besonders bevorzugte erfindungsgemäß verwendete Verbindungen zur Beschichtung von Glasoberflächen (von planaren und nicht planaren Gläsern) sind die mit den Formeln 1 bis 4 dargestellten Verbindungen - LPG(OMe) (1); LPG(OH) (2); HPG(OMe) (3) und HPG(OH) (4). Wiederholungseinheiten liegen bevorzugt zwischen 10 und 15000, besonders bevorzugt zwischen 10 und 80 für Polyglycerine mit einem Verzweigungsgrad von 0-100%, wobei ein Verzeigungsgrad von 0% oder 50-70% besonders bevorzugt ist. Hexadecantriethylsilan (HDS, 5) und Monomethoxypolyethylen glycol (mPEG, 6) diente zum Vergleich als hydrophobe bzw. hydrophile Kontrolloberflächenbeschichtung.
Das anliegende Formelschema 1A und 1B zeigt die erfindungsgemäße Beschichtung von aktiviertem Glas mit den bevorzugt genannten Verbindungen.

Eine Beschichtung von Glasoberflächen mit Triethoxysilyl-modifiziertem hochverzweigten Polyglycerin mit freien Hydroxylgruppen (HPG(OH)) ist besonders bevorzugt. So wurde bei mit HPG(OH) modifizierten Gefäßen z.B. keine Änderung der Menge an adsorbiertem IgG1 festgestellt, wenn die beschichteten Gefäße hitzesterilisiert waren im Vergleich zu unsterilisierten beschichteten Glasoberflächen.
Glasoberflächen, die mit linearem Poly(methyl glycerin) (LPG(OMe)) oder hochverzweigtem Polyglycerin mit methylierten Hydroxylgruppen (HPG(OMe)) beschichtet waren, zeigten zwar einen Anstieg der Proteinadsorption nach Hitzesterilisation im Vergleich zu den entsprechenden unsterilisierten Gefäßen. Jedoch überstanden auch sie das Autoklavieren ohne Beeinträchtigung der Protein-abweisenden Eigenschaften.
Im Vergleich zu unbeschichteten Glasmaterialien ist der Verlust an Biopharmazeutikum/Protein durch Adsorption an die Oberfläche/Gefäßinnenwand auch nach Hitzesterilisation noch mindestens um 50% reduziert.

Da die Silyl-modifizierten HPG(OH) Beschichtungen im Vergleich auch das Verfahren der Hitzesterilisation erlauben, vergrößern sie das potentielle Einsatzgebiet signifikant und sind deshalb besonders bevorzugt eingesetzte Beschichtungsmittel. Somit eignet sich HPG(OH) als Beschichtungsmaterial für Mehrwegglasgefäße bzw. Mehrwegglasgerätschaften. Weiterhin gewährleistet die hochverzweigte Struktur von HPG(OH) wegen des größeren sterischen Anspruches im Vergleich zu linearen Strukturen eine vollständigere Belegung der Oberfläche und somit eine besseren Abschirmung derselben im Vergleich zu linearen Beschichtungsmaterialien wie z.B. mPEG.

Mit dem erfindungsgemäßen Beschichtungsverfahren können sterilisierfeste Glasoberflächen von Glasplatten, in Glasgefäßen sowie Glasgerätschaften wie Glaspipetten oder Glaspipettenspitzen mit verringerter Adsorption von Biopharmazeutika und anderen pharmazeutischen und biologischen Materialien bereitgestellt werden. Derartig beschichtete Glasoberflächen sind von besonderem Interesse im Bereich Medizin, Pharmazie, Biologie, Biochemie und Biotechnologie. Biopharmazeutika sind z.B. Gerinnungsfaktoren, Fibrinolytika, Hormone, Hämatopoetische Wachstumsfaktoren Interferone, auf Interleukinen basierende Produkte, Impfstoffe, monoklonale Antikörper sowie sonstige Produkte, z.B. weitere therapeutische Enzyme/Proteine, Zellen, Bakterien oder Viren.
Die erfindungsgemäß verwendete Beschichtung mit Silyl-modifizierten Polyglycerolen ist z.B. geeignet für Verpackungsmaterialien und Aufbewahrungsgefäße, aber auch für sämtliche Glas-basierte Reaktionsgefäße und Arbeitsgeräte. Dazu gehören beispielsweise glasbasierte Diagnostiktools, z.B. Assay-Matrices, Analytik-Werkzeuge, z.B. Pipettenspitzen oder Gefäße für die Probenvorbereitung und das sogenannte Handling von verdünnten Protein- und Biomoleküllösungen.
Die erfindungsgemäß bereitgestellten Beschichtungen können u.a. die Nachweisgrenze von Assays verbessern und den Verlust von Biomolekülen durch unspezifische Adsorption an der Glasoberfläche wesentlich verringern bzw. vermeiden. Sie sind nicht proteinbindend wirksam und stabil gegenüber pharmazeutischen Stress-Testbedingunen, wie Autoklavieren und/oder Hitzesterilisation. Sie entsprechen Beschichtungen mit PEG-Derivaten, sind jedoch durch die einfache technische Herstellung einer Beschichtung mit PEG-Derivaten weit überlegen, da die Beschichtung nicht unter Ausschluss von Feuchtigkeit erfolgen muss und insbesondere HPG(OH)-Beschichtungen stabil gegenüber den Stressbedingungn zur Entpyrogenisierung (Hitzesterilisation ≥ 200 °C, 30 min) sind.

Darüber hinaus hat sich gezeigt, dass auch nach längeren Aufbewahrungszeiten, eine gewöhnlich einsetzende Denaturierung von Biomolekülen insbesondere Proteinen nicht eintritt. So zeigten z.B. katalytisch aktive Proteine unveränderte Enzymaktivität nach Lagerung in den Gefäßen mit Polyglycerin-Beschichtung während ein deutlicher Verlust der Enzymaktivität nach Lagerung in unbehandelten Glasgefäßen zu verzeichnen war. Dies ist einerseits auf den Verlust an Enzymmasse durch nicht-spezifische Adsorption auf der unbeschichteten Gefäßwand und andererseits auf eine Denaturierung und Entfaltung des Enzyms induziert durch die Adsorption auf der Gefäßwand zurückzuführen.

Anhand von Beispielen wird die Erfindung näher beschrieben.

### Ausführungsbeispiele

### Beispiel 1

### Synthese von HPG(OH), HPG(OMe), LPG(OMe), LPG(OH) und mPEG

Alle verwendeten Chemikalien und Lösungsmittel hatten Reagenz- oder HPLC geeignete Qualität, wurden daher ohne weitere Aufreinigung eingesetzt und wurden von Sigma (Steinheim, Deutschland) bezogen, soweit nicht anders vermerkt. Hexadecyltriethyoxysilan (HDS) (95%) wurde von ABCR chemicals (Karlsruhe, Deutschland) bezogen.

Dialyse zur Aufreinigung von Makromolekülen wurde in Dialyseschläuchen der Firma Sigma (No. D-7884, Durchmesser: 32 mm, Molgewichts cut-off (MWCO) 1000 g mol⁻¹) aus benzoylierter Cellulose durchgeführt. Phosphate buffered saline (PBS; 10 x konzentriert; 90 g·L⁻¹ NaCl, 7.95 g·L⁻¹ Na₂HPO₄, and 1.44 g·L⁻¹ KH₂PO₄; pH 7.4) wurde von Lonza (Köln, Deutschland) bezogen und wurde vor der Verwendung auf einfache Konzentration (1 x) mit MilliQ Wasser verdünnt. Das verwendete destillierte Wasser wurde mit Hilfe einer Millipore Wasseraufreinigungsanlage mit einem Minimumwiderstand von 18.0 MΩcm hergestellt.
¹H NMR and ¹³C NMR Spektren wurden bei 25 °C und einer Konzentration von 100 g·L⁻¹ auf einem Jeol ECX 400 NMR Gerät bei 400 MHz bzw. 101 MHz aufgenommen. Die erhaltenen Spektren wurden auf den Peak des deuterierten Lösungsmittels kalibriert und die chemischen Verschiebungen zwischen Kaliumbromid-Platten auf einem Nicolet Avator 320 FT-IR Instrument im Bereich zwischen 4000-600 cm⁻¹ Wellenzahlen aufgezeichnet und wurden mit Hilfe der Software EZ OMNIC ESP ausgewertet.
Lineares, mono-amin-funktionalisiertes Poly(methyl glycerin) und lineares, mono-amin-funktionalisiertes Poly(ethoxyethyl glycerin) als Precursor für lineares Polyglycerin wurden entsprechend der Literatur synthetisiert [M. Weinhart, I. Grunwald, M. Wyszogrodzka, L. Gaetjen, A. Hartwig, R. Haag, Chem. - Asian J. 2010, 5, 1992]. Mono-amine funktionalisiertes Methoxypoly(ethylen glykol) (mPEG) wurde über eine dreistufige Synthese hergestellt. Hierzu wurde die Hydroxylgruppe von mPEG (M = 1100 g·mol⁻¹) entsprechend der Literatur zuerst mittels Methansulfonylchlorid zum Mesylat umgesetzt und anschließend mit Natriumazid zum entsprechenden Azid substituiert. Die anschließende Reduktion der Azidgruppe zum entsprechenden Amin erfolgte mittels katalytischer Hydrierung mit Pd/C [S. Roller, H. Zhou, R. Haag, Mol. Diversity 2005, 9, 305; A. L. LaFrate, K. E. Carlson, J. A. Katzenellenbogen, Bioorg. Med. Chem. 2009, 17].
Hochverzweigtes Polyglycerin (HPG) wurde mittels einer einstufigen anionischen, Ring-öffnenden Polymerisation synthetisiert [A. Sunder, R. Hanselmann, H. Frey, R. Mühlhaupt, Macromolecules 1999, 32, 4240; A. Sunder, R. Mühlhaupt, R. Haag, H. Frey, Adv. Mater. 2000, 12, 235]. Teilweise Amin-funktionalisiertes, methyliertes, HPG (**3d**) wurde mittels einer vierstufigen Synthese hergestellt. Hierzu wurden 5% der Hydroxylgruppe von HPG entsprechend der Literatur [S. Roller, H. Zhou, R. Haag, Mol. Diversity 2005, 9, 305] zuerst mittels Methansulfonylchlorid zum Mesylat (**3a**) umgesetzt und anschließend mit Natriumazid zum entsprechenden Azid (**3b**) substituiert. Die restlichen Hydroxylgruppen wurden mittels Methyliodid methyliert (**3c**). Die anschließende Reduktion der Azidgruppen zu den entsprechenden Aminen (**3d**) erfolgte mittels katalytischer Hydrierung mit Pd/C.

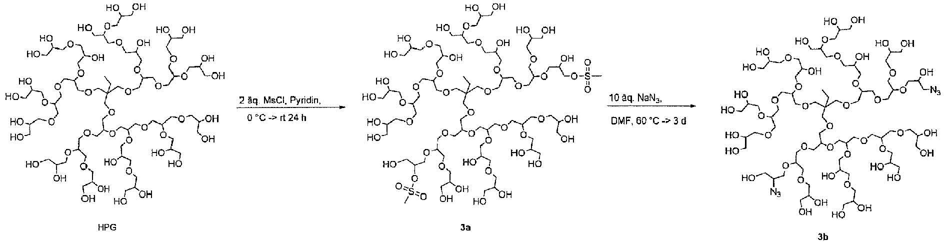

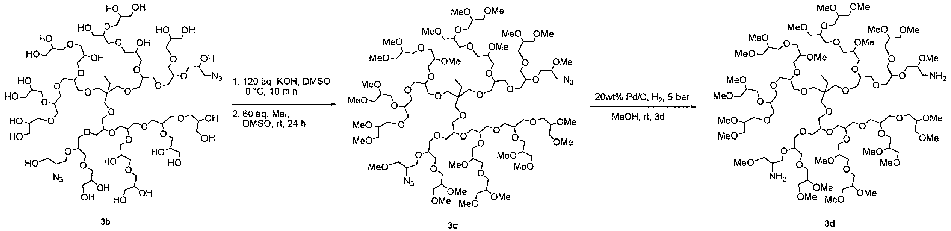

### Synthese von methyliertem HPG (HPG(OMe)) mit statistisch 5% Amin-funktionalitäten

### Azid-funktionalisiertes, methyliertes HPG (3c)

Zu Azid-funktionalisiertem HPG (**3b**) (2000 g·mol⁻¹, 12.3 g, 6.2 mmol) in trockenem DMSO (200 mL) wurde gepulvertes KOH (41.7 g, 744 mmol, 120 äq. (4 äq./OH)) gegeben. Die resultierende Suspension wurde für 10 min. stark gerührt und im Eisbad auf 0 °C abgekühlt. Anschließend wurde Methyliodid (52.8 g, 23.2 mL 372 mmol, 60 äq. (2 äq./OH)) langsam zugetropft und die Reaktionmischung bei Raumtemperatur für 24 h unter Argon gerührt. Die Reaktion wurde mit Wasser gequencht und die Reaktionsmischung unter reduziertem Druck aufkonzentriert. Anschließend wurde der Rückstand mit Wasser versetzt und 3 x mit DCM extrahiert. Nach Trocknen der vereinigten organischen Phasen über MgSO₄ und Entfernen des Lösemittels unter reduziertem Druck, wurde die Titelverbindung als viskoses Öl erhalten (12.7 g, 79%).
¹H NMR (400 MHz; CDCl₃): 5 = 3.64-3.43 (m, 200 H, PG-Rückgrat, sekundäre -OMe); 3.34 (s, 43 H, primäre -OMe); 1.41-1.34 (m, 2 H, CH₂CH₃-Initiator); 0.81 (t, 3 H, CH₂CH₃-Initiator) ppm. ¹³C NMR (700 MHz; CDCl₃): δ = 79.5, 78.7, 72.4, 71.8, 70.7, 69.9 (HPG-Rückgrat, NHCH₂CH₂CH₂O); 59.3 (primäre -OMe); 58.0 (sekundäre -OMe); 51.6 (CH₂N₃); 23.7 (CH₂CH₃-Initiator); 7.7 (CH₂CH₃-Initiator) ppm. IR vₘₐₓ/cm⁻¹: 3361; 2876; 2098; 1460; 1355; 1274; 1196; 1089; 961; 832; 677.

### Amin-funktionalisiertes, methyliertes HPG (3d)

Azid-funktionalisiertes, methyliertes HPG (**3c**) (2600 g·mol⁻¹, 12.7 g, 4.9 mmol) wurde in Methanol (100 mL) gelöst, Pd/C (20 wt%, 2.5 g) zugegeben und die Reaktion bei Raumtemperatur für 3 Tage unter H₂-Atmosphäre (5 bar) durchgeführt. Anschließend wurde das Reaktionsgemisch über Celite™ filtriert. Das Filtrat wurde unter reduziertem Druck aufkonzentriert wobei die Titelverbindung (11.3 g, 89%) als viskoses Öl erhalten wurde.
¹H NMR (400 MHz; CDCl₃): δ = 3.64-3.42 (m, 200 H, PG-Rückgrat, sekundäre -OMe); 3.33 (s, 43 H, primäre -OMe); 1.36-1.32 (m, 2 H, CH₂CH₃-Initiator); 0.81 (t, 3 H, CH₂CH₃-Initiator) ppm. ¹³C NMR (700 MHz; CDCl₃): δ = 81.2, 79.5, 79.2, 79.0, 78.7, 78.5, 72.5, 72.2, 71.5, 70.9, 69.7 (HPG -Rückgrat); 59.1 (primäre -OMe); 57.9 (sekundäre -OMe); 50.7 (CHNH₂); 42.8 (CH₂NH₂) 23.7 (CH₂CH₃-lnitiator); 7.7 (CH₂CH₃-Initiator) ppm. IR vₘₐₓ/cm⁻¹: 3362; 2875; 1643; 1461; 1356; 1262; 1196; 1085; 960; 832; 679.

Aminfunktionalisiertes HPG wurde über eine Standardveretherung mit *N,N*-Dibenzyl-3-bromopropan-1-amin [A. S. Nagle, R. N. Salvatore, B.-D. Chong, K. Woon Jung, Tetrahedron Lett. 2000, 41, 3011] modifiziert wobei HPG (**4a**) mit statistisch einem Dibenzylaminopropyl-Linker erhalten wurde, wie mittels ¹H NMR Spektroskopie nachgewiesen wurde. Entschützung der Amingruppen mittels katalytischer Hydrierung mit Pd/C lieferte das entsprechende Aminopropyl-funktionalisierte HPG (**4b**).

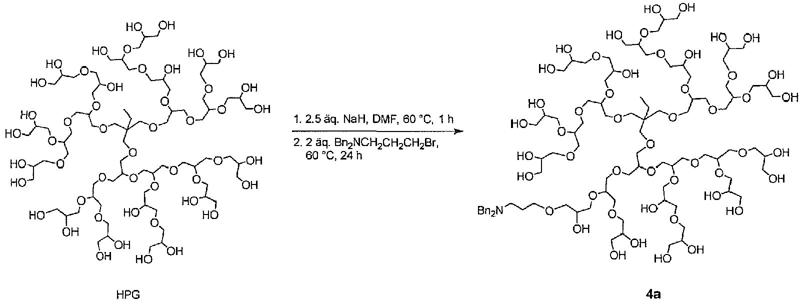

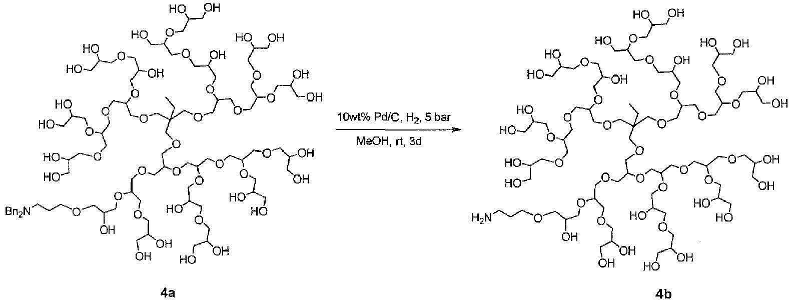

### Synthese von HPG(OH) mit statistisch einem 3-Aminopropyl-Linker

### Synthese von N,N-dibenzylaminopropyl-funktionalisiertem HPG (4a)

HPG (2000 g·mol⁻¹, 13.5 g, 6.75 mmol) wurde in trockenem DMF (100 mL) bei 60 °C gelöst, 1 Natriumhydride (60% in Mineralöl, 0.67 g, 16.8 mmol, 2.5 äq.) wurde unter Argon Gegenstrom zugegeben und die resultierende Lösung wurde für 1 h gerührt. Eine Lösung von *N,N*-Dibenzyl-3-bromopropan-1-amin (4.3 g, 13.5 mmol, 2.0 äq.) in trockenem DMF (10 mL) wurde zur Polymerlösung gegeben und die Reaktionsmischung bei 60 °C für 24 h gerührt. Anschließend wurde das Lösungsmittel im Vakuum entfernt und der Rückstand wurde mittels Dialyse gegen Ethanol aufgereinigt. Nach Entfernen des Lösungsmittels unter reduziertem Druck wurde die Titelverbindung (12.2 g, 81%) als viskoses Öl erhalten.
¹H NMR (400 MHz; MeOH-d4): δ = 7.38-7.18 (m, 10 H, Ar-H); 3.97-3.40 (m, 137 H, HPG-Rückgrat, NCH₂CH₂CH₂O); 3.38-3.33 (m, 4 H, Ar-CH₂N); 2.57-2.45 (m, 2 H, Bn₂NCH₂) 1.83-1.71 (m, 2 H, NCH₂CH₂CH₂O); 1.44-1.31 (m, 2 H, CH₂CH₃-Initiator); 0.93-0.84 (m, 3 H, CH₂CH₃-Initiator) ppm. ¹³C NMR (101 MHz; MeOH-d4): δ = 140.9, 130.0, 129.3, 128.0 (Ar-C); 81.4, 79.7, 73.9, 72.4, 72.2, 70.6, 64.4, 62.6 (HPG-Rückgrat, NCH₂CH₂CH₂O); 59.4 (NCH₂-Ar); 51.4 (Bn₂NCH₂) 44.6 ((CH₂)₄C-Initiator); 28.3 (NHCH₂CH₂CH₂O); 23.7 (CH₂CH₃-Initiator); 8.1 (CH₂CH₃-Initiator) ppm.

### Synthese von Aminopropyl-funktionalisiertem HPG (4b)

*N,N*-Dibenzylaminopropyl-funktionalisiertes HPG (**4a**) (2237 g·mol⁻¹, 12.0 g, 5.36 mmol) wurde in Methanol (100 mL) gelöst, Pd/C (10wt%, 1.2 g) wurde zugegeben und die Reaktion wurde bei Raumtemperatur für 3 Tage unter H₂-Atmosphäre (5 bar) durchgeführt. Anschließend wurde das Reaktionsgemisch über Celite™ filtriert. Das Filtrat wurde unter reduziertem Druck aufkonzentriert wobei die Titelverbindung (10.5 g, 95%) als viskoses Öl erhalten wurde.
¹H NMR (400 MHz; MeOH-d4): δ = 3.99-3.40 (m, 137 H, HPG-Rückgrat + NCH₂CH₂CH₂O); 2.93-2.83 (m, 2 H, NCH₂CH₂CH₂O); 1.91-1.74 (m, 2 H, NCH₂CH₂CH₂O); 1.44-1.32 (m, 2 H, CH₂CH₃-Initiator); 0.93-0.83 (m, 3 H, CH₂CH₃-Initiator) ppm. ¹³C NMR (101 MHz; MeOH-d4): δ = 81.4, 79.7, 73.9, 72.4, 72.2, 70.6, 64.4, 62.6 (HPG-Rückgrat, NCH₂CH₂CH₂O); 44.6 ((CH₂)₄C-Initiator); 40.1 (NH₂CH₂); 30.2 (NH₂CH₂CH₂CH₂O); 23.7 (CH₂CH₃-Initiator); 8.1 (CH₂CH₃-Initiator) ppm.

### Beispiel 2

### Synthese von Triethoxysilyl modifizierten Polymeren

Das entsprechende Mono-amin-funktionalisierte Glycerin-basierte Polymer (1 äq.) gemäß Beispiel 1 wurde unter Inertgas-Atmosphäre in trockenem Lösungsmittel in einem Teflon®-Kolben gelöst. Triethylamin (3 äq) wurden zugegeben während die Lösung bei Raumtemperatur gerührt wurde und mit 3-(Triethoxysilyl)propylisocyanat (1.1 äq.) versetzt wurde. Die Reaktion wurde für weitere 24 h gerührt. Nach Filtration der Lösung und Einengung des Filtrats wurde das erhaltene Rohprodukt mittels Dialyse gegen Ethanol für 24 h weiter aufgereinigt, wobei das Lösungsmittel dreimal gewechselt wurde. Das aufgereinigte Produkt wurde eingeengt und im Hochvakuum getrocknet.

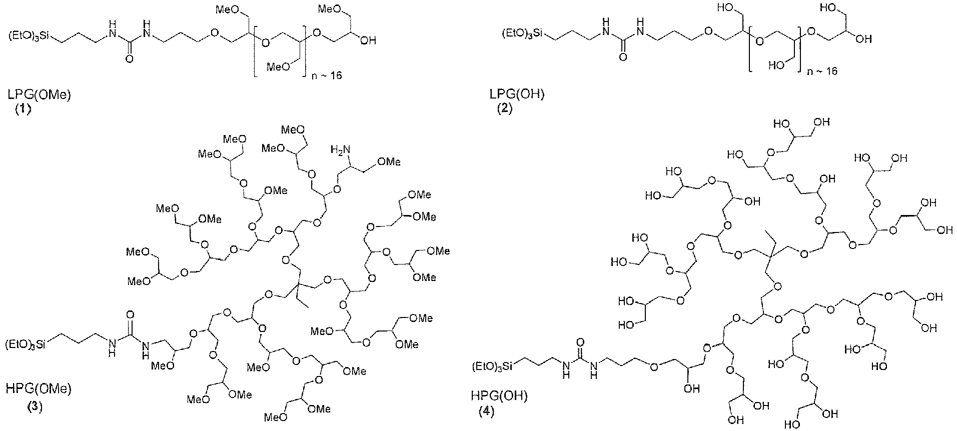

### Triethoxysilyl modifizierte Polymere

### Triethoxysilyl modifiziertes lineares Poly(methyl glycerin) (1)

Mono-amin-funktionalisiertes Poly(methyl glycerin) (1400 g·mol⁻¹, 8.72 mmol, 12.2 g) wurde an 3-(Triethoxysilyl)propylisocyanat in trockenem THF (100 mL) entsprechend der allgemeinen Vorschrift gekuppelt und lieferte 11.4 g (82%) von **1** als ein farbloses Öl nach Dialyse.
¹H NMR (400 MHz; CDCl₃): δ = 5.08-4.68 (brs. NH); 4.96-3.84 (m, 1 H, CH(CH₂OMe)OH); 3.77 (q, 6 H, SiOCH₂CH₃); 3.70-3.34 (m, 86 H, LPG-Rückgrat, NHCH₂CH₂CH₂O); 3.31 (s, 48 H, LPG(OMe)); 3.28-3.06 (m, 4 H, 2 x CH₂NH); 2.31 (brs, 1 H, OH) 1.84-1.64 (m, 2 H, NHCH₂CH₂CH₂O); 1.63-1.47 (m, 2 H, SiCH₂CH₂CH₂NH); 1.24-1.12 (m, 9 H, SiOCH₂CH₃); 0.59 (t, 2 H, SiCH₂CH₂CH₂NH) ppm. ¹³C NMR (101 MHz; CDCl₃): δ = 158.4 (C=O); 78.5, 73.6, 72.5, 71.0, 69.8, 69.3 (LPG-Rückgrat, NHCH₂CH₂CH₂O); 59.1 (LPG(OMe)); 58.2 (SiOCH₂CH₃); 42.8 (SiCH₂CH₂CH₂NH); 38.4 (NHCH₂CH₂CH₂O); 27.4 (NHCH₂CH₂CH₂O); 23.7 (SiCH₂CH₂CH₂NH); 18.2 (SiOCH₂CH₃); 7.6 (SiCH₂CH₂CH₂NH) ppm. IR (KBr) vₘₐₓ/cm⁻¹: 3381; 2976; 2880; 2812; 1721; 1651; 1556; 1455; 1390; 1253; 1198; 1115; 961; 863; 775.

### Triethoxysilyl modifiziertes lineares Polyglycerin (2)

Mono-amin-funktionalisiertes lineares Poly(ethoxyethyl glycerin) (2500 g·mol⁻¹, 4.0 mmol, 10 g) als Vorläufer für lineares Polyglycerin wurde an 3-(Triethoxysilyl)pröpylisocyanat in trockenem THF (100 mL) entsprechend der allgemeinen Vorschrift gekuppelt und lieferte 9.6 g (87%) des Triethoxysilyl-funktionalisierten linearen Poly(ethoxyethyl glycerine)s als hell gelbes Öl nach Dialyse.
¹H NMR (400 MHz; CDCl₃): δ = 4.63 (d, 17 H, OCH(CH₃)); 3.84 (brs, 1 H, OH); 3.74 (q, 6 H, SiOCH₂CH₃); 3.70-3.25 (m, 122 H, LPG-Rückgrat, NHCH₂CH₂CH₂O); 3.27-3.02 (m, 4 H, 2 x CH₂NH); 1.77-1.61 (m, 2 H, NHCH₂CH₂CH₂O); 1.61-1.42 (m, 2 H, SiCH₂CH₂CH₂NH); 1.22 (d, 48 H, OCH(CH₃)); 1.12 (t, 57 H, SiOCH₂CH₃, OCH₂CH₃); 0.56 (t, 2 H, SiCH₂CH₂CH₂NH) ppm. ¹³C NMR (101 MHz; CDCl₃): δ = 158.6 (C=O); 99.7 (OC(CH₃)H); 78.7, 72.5, 70.0, 64.8, 64.6, 62.6, 60.1 (LPG-Rückgrat, NHCH₂CH₂CH₂O); 58.2 (SiOCH₂CH₃); 42.5 (SiCH₂CH₂CH₂NH); 37.5 (NHCH₂CH₂CH₂O); 27.3 (NHCH₂CH₂CH₂O); 23.1 (SiCH₂CH₂CH₂NH); 19.6 (OCH(CH₃)) 18.1 (SiOCH₂CH₃); 15.2 (OCH₂CH₃); 7.5 (SiCH₂CH₂CH₂NH) ppm. IR (KBr) vₘₐₓ/cm⁻¹: 3372; 2922; 2875; 1641; 1566; 1454; 1381; 1263; 1074; 1043; 907; 879; 733.

Die anschließende Abspaltung der Ethoxyethylacetal-Seitenketten des Polymers (1.1 mmol, 3 g) in Gegenwart einiger Tropfen konzentrierter Trifluoroessigsäure in trockenem THF (20 ml) unter Inertgas-Atmosphäre wurde für 2 h bei Raumtemperatur unter kräftigem Rühren durchgeführt wobei die Titelverbindung nach und nach ausfiel. Die obere Flüssigkeitsschicht wurde dekantiert, das erhaltene Polymer wurde dreimal mit trockenem THF gewaschen und wurde anschließend im Hochvakuum getrocknet und lieferte 1.4 g (78%) der Titelverbindung als viskoses, farbloses Öl. Um eine Quervernetzung der vielen Hydroxyl-Gruppen des Polymers mit den Triethoxysilyl-Gruppen zu verhindern, wurde Verbindung **2** als Stammlösung (0.1 g·mL⁻¹) in trockenem Ethanol im Kühlschrank unter Inertgas-Atmosphäre aufbewahrt und gelagert und war somit mehrere Monate stabil ohne zu Gelieren.
¹H NMR (400 MHz; MeOH-d4): δ = 3.79-3.40 (m, 95 H, LPG-Rückgrat, SiOCH₂CH₃, NHCH₂CH₂CH₂O); 3.21-2.97 (m, 4 H, 2 x CH₂NH); 2.02-1.86 (m, 2 H, NHCH₂CH₂CH₂O); 1.68-1.44 (m, 2 H, SiCH₂CH₂CH₂NH); 1.14 (t, 9 H, SiOCH₂CH₃); 0.60 (t, 2 H, SiCH₂CH₂CH₂NH) ppm. ¹³C NMR (101 MHz; MeOH-d4): δ = 158.3 (C=O); 81.5, 70.6, 64.3, 62.6, 71.0 (LPG-Rückgrat, NHCH₂CH₂CH₂O); 58.3 (SiOCH₂CH₃); 44.4 (SiCH₂CH₂CH₂NH); 37.3 (NHCH₂CH₂CH₂O); 27.9 (NHCH₂CH₂CH₂O); 23.6 (SiCH₂CH₂CH₂NH); 18.2 (SiOCH₂CH₃); 7.1 (SiCH₂CH₂CH₂NH) ppm. IR (KBr) vₘₐₓ/cm⁻¹: 3350; 2926; 2875; 1694; 1538; 1458; 1348; 1256; 1039; 979; 916; 857.

### Triethoxysilyl modifiziertes, methyliertes HPG (3)

Amin-funktionalisiertes HPG(OMe) (**3b**) (2600 g·mol⁻¹, 1.5 mmol, 4 g) wurde an 3-(Triethoxysilyl)propyl isocyanat in trockenem THF (100 mL) entsprechend der allgemeinen Vorschrift gekuppelt und lieferte 3.5 g (88%) methyliertes HPG mit statistisch einem Triethoxysilyl-Linker als viskoses Öl.
¹H NMR (700 MHz; CDCl₃): δ = 5.17 (brs, 2H, 2 x NH); 3.73 (q, 6 H, SiOCH₂CH₃); 3.63-3.34 (m, 203 H, PG-Rückgrat, sekundäre -OMe); 3.29 (s, 43 H, primäre -OMe); 3.08-3.00 (m, 4 H, 2 x CH₂NH); 1.54-147 (m, 2 H, SiCH₂CH₂CH₂NH); 1.32-1.26 (m, 2 H, CH₂CH₃-Initiator); 0.76 (t, 3 H, CH₂CH₃-Initiator); 0.54 (t, 2 H, SiCH₂CH₂CH₂NH) ppm. ¹³C NMR (700 MHz; CDCl₃): δ = 158.7 (C=O); 79.4, 78.7, 72.3, 71.7, 70.9, 69.8, (HPG -Rückgrat, NHCH₂CH₂CH₂O); 59.1 (primäre -OMe); 58.3 (OCH₂CH₃) ; 57.9 (sekundäre -OMe); 43.2 (NHCH₂CH₂CHO); 42.8 (SiCH₂CH₂CH₂NH); 23.7 (CH₂CH₃-Initiator); 23.0 (SiCH₂CH₂CH₂NH); 18.3 (OCH₂CH₃); 7.7 (CH₂CH₃-Initiator) ppm. IR vₘₐₓ/cm⁻¹: 3360; 2878; 1644; 1460; 1356; 1261; 1196; 1085; 956; 915; 832; 683.

### Triethoxysilyl modifiziertes hochverzweigtes Polyglycerin (4)

Mono-amin-funktionalisiertes HPG (**4b**) (2000 g·mol⁻¹, 4.45 mmol, 8.9 g) wurde an 3-(Triethoxysilyl)propylisocyanat in trockenem DMF (100 mL) entsprechend der allgemeinen Vorschrift gekuppelt und lieferte 8.2 g (82%) von **4** als leicht gelbes, viskoses Öl nach Dialyse. Um eine Quervernetzung der vielen Hydroxyl-Gruppen des Polymers mit den Triethoxysilyl-Gruppen zu verhindern, wurde Verbindung **3** als Stammlösung (0.1 g·mL⁻¹) in trockenem Ethanol im Kühlschrank unter Inertgas-Atmosphäre aufbewahrt und gelagert und war somit mehrere Monate stabil ohne zu Gelieren.
¹H NMR (400 MHz; MeOH-d4): δ = 4.00-3.31 (m, 143 H, PG-Rückgrat, SiOCH₂CH₃, OCH₂CH₂CH₂N); 3.26-3.06 (m, 4 H, 2 x CH₂NH); 1.80-1.68 (m, 2 H, NHCH₂CH₂CH₂O); 1.67-1.50 (m, 2 H, SiCH₂CH₂CH₂NH); 1.46-1.33 (CH₂CH₃-Initiator); 1.18 (t, 9 H, SiOCH₂CH₃); 0.95-0.83 (m, 3 H, CH₂CH₃-Initiator); 0.76-0.57 (m, 2 H, SiCH₂CH₂CH₂NH) ppm. ¹³C NMR (101 MHz; MeOH-d4): δ = 161.2 (C=O); 81.4, 79.8, 74.0, 72.4, 72.2, 70.7, 64.4, 62.8 (HPG - Rückgrat, NHCH₂CH₂CH₂O); 58.4 (OCH₂CH₃); 44.6 (C(CH₂)₄-Initiator); 43.7 (NHCH₂CH₂CH₂O); 36.7 (SiCH₂CH₂CH₂NH); 28.2 (NHCH₂CH₂CH₂O); 24.8 (SiCH₂CH₂CH₂NH); 23.7 (CH₂CH₃-lnitiator); 18.7 (OCH₂CH₃); 8.5 (SiCH₂CH₂CH₂NH); 8.1 (CH₂CH₃-Initiator) ppm. IR (KBr) vₘₐₓ/cm⁻¹: 3353; 2878; 1651; 1556; 1455; 1258; 1078; 878.

### Triethoxysilyl modifiziertes Methoxypoly(ethylen glykol) (mPEG, 6)

Mono-amin-funktionalisiertes lineares Methoxypoly(ethylen glykol) (mPEG) (1100 g·mol⁻¹, 6.4 mmol, 7.0 g) wurde an 3-(Triethoxysilyl)propylisocyanat in trockenem THF (50 mL) entsprechend der allgemeinen Vorschrift gekuppelt und lieferte 6.0 g (72%) des Triethoxysilyl-funktionalisierten Methoxypoly(ethylen glykol) (mPEG) als farblosen Feststoff nach Dialyse.
¹H NMR (400 MHz; CDCl₃): δ = 3.79 (q, 6 H, SiOCH₂CH₃); 3.70-3.52 (m, 110 H, PEG-backbone); 3.46-3.42 (m, 2 H, NHCH₂CH₂O); 3.42 (s, 3 H, PEG-OMe); 3.16-3.09 (m, 2 H, SiCH₂CH₂CH₂NH); 2.24 (brs, 2 H, NH); 1.58-1.52 (m, 2 H, SiCH₂CH₂CH₂NH); 1.23-1.17 (m, 9 H, OCH₂CH₃); 0.60 (t, 2 H, SiCH₂CH₂CH₂NH) ppm. ¹³C NMR (101 MHz; CDCl₃): δ = 158.3 (C=O); 71.7-70.3 (PEG-backbone); 58.8 (PEG-OMe); 58.2 (SiOCH₂CH₃); 42.7 (SiCH₂CH₂CH₂NH); 40.1 (NHCH₂CH₂O); 23.6 (SiCH₂CH₂CH₂NH); 18.1 (SiOCH₂CH₃); 7.5 (SiCH₂CH₂CH₂NH) ppm. IR (KBr) vₘₐₓ/cm⁻¹: 3424; 2881; 1645; 1559; 1467; 1385; 1345; 1281; 1249; 1115; 953; 843; 794.

### Beispiel 3

### Allgemeine Vorschrift für die Glasbeschichtung

Menzel® Deckgläschen (18 x 18 x 0.13-0.16 mm) (VWR, Darmstadt, Deutschland), Nexterion® Glas B Objektträger (75.6 x 25 x 1 mm) (Schott, Jena, Deutschland) und Fiolax® klar Aufbewahrungsgefäße (Außendurchmesser: 17.5 ± 0.17 mm) (Schott, Jena, Deutschland) wurden durch 30-minütiges Einlegen der Gläser in frisch vorbereiteter Piranha-Lösung (H₂SO₄:H₂O₂=3:1) gereinigt und chemisch aktiviert. Im Anschluss wurden die Gläser aufeinander folgend mit destilliertem Wasser und Ethanol gespült und schließlich im N₂-Gasstrom getrocknet. Sofort nach der Aktivierung der Glasoberfläche wurde das entsprechende Glas für die Beschichtung mit dem jeweiligen Triethoxysilyl modifizierten Polymer verwendet.

Für die Beschichtung wurde das jeweilige Triethyoxsilyl-funktionalisierte Polymer in Ethanol gelöst und bei einer Konzentration von 31.25·10⁻² µM pro mm² Glasoberfläche und mit einer katalytischen Menge Triethylamin (3.125·10⁻³ µM pro mm² Glasoberfläche) für 18 h bei 70 °C auf die zu beschichtende Oberfläche gegeben. Anschließend wurden die Glasoberflächen gründlich mit Ethanol gewaschen um Reste der nicht-gebundenem, physisorbierten Triethoxysilyl-Verbindung zu entfernen und wurde im N₂-Gasstrom getrocknet. Für die finale Quervernetzung der Oberflächengebunden Oxysilane wurden die beschichteten Gläser auf 100 °C für 1 h unter Normalatmosphäre erhitzt, mit Wasser und Ethanol gespült, im N₂-Gasstrom getrocknet, und im Dunkeln bei Raumtemperatur bis zur gewünschten Verwendung aufbewahrt.

### Beispiel 4

### a) Proteinadsorption von 1 mg•mL⁻¹ BSA-FITC und Fib-FITC in PBS [ng•cm⁻²] auf beschichteten und unbeschichteten planaren Glasplättchen.

Polyglycerin-beschichtete, planare Glasoberflächen und nicht-planare Glasgefäße zeigen im Vergleich zu nicht beschichtetem Glas eine deutlich verringerte Adsorption von Proteinen. Anhand der Plasmaproteine BSA und Fibrinogen konnte gezeigt werden, dass deren unspezifische Adsorption auf mit linearen Polyglycerinen (LPG(OMe) und LPG(OH)) sowie hochverzweigten Polyglycerinen (HPG(OH)) im Zeitraum von 4 Stunden (> 96% verringerte Adsorption im Vergleich zu unbeschichtetem Glas) bis 24 Stunden (> 90% verringerte Adsorption im Vergleich zu unbeschichtetem Glas) nur geringfügig ansteigt und somit die Stabilität der Beschichtung belegt **(vgl. Abb**. **1).** Die Bestimmung erfolgte mittels epifokaler Fluoreszenz Mikroskopie. Die gemessenen Fluoreszenzintensitäten wurden mit Hilfe einer Kalibrierungskurve korreliert.

### b) Adsorption das Antikörpers IgG1 in mg/m² an mit hochverzweigtem Polyglycerin beschichteten Glasgefäßen (HPG(OH)-coated Fiolax® vial) sowie an standardmäßig verwendeten unbeschichteten Fiolax® Gefäßen bei unterschiedlicher Ionenstärke (170 mM, 22 mM) unterschiedlichen pH-Werten und dem Zusatz von Polysorbat 80 (PS 80; 0.02 wt%) als Tensid im Falle der nicht beschichteten Gefäße.

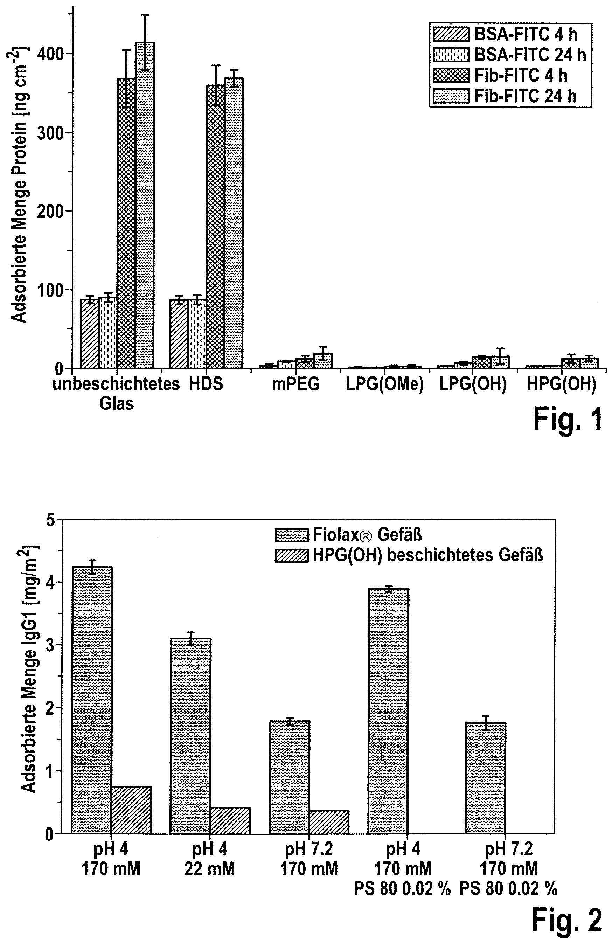

Darüber hinaus wurde mittels HPLC nach Desorption von adsorbiertem Protein mit Hilfe von Sodium Dodecylsulfat wie von Mathes und Friess beschrieben [J. Mathes, W. Friess W. Eur J Pharm Biopharm. 2011, 78, 239] die Adsorption eines IgG1 Antikörpers an der Glasoberfläche von mit hochverzweigten Polyglycerin (HPG(OH)) beschichteten und nicht-beschichteten Fiolax^{e} Glasvials der Firma Schott über 24 h bestimmt. Es konnte gezeigt werden, dass die beschichteten Gefäße eine deutlich geringere Proteinadsorption sowohl bei niedrigem (pH 4), bei annähernd physiologischem pH-Wert (pH 7.2) und unterschiedlicher Ionenstärke der Proteinlösung aufweisen. Gegenwärtig häufig zugesetzte Tenside (z.B. Polysorbat 80), welche die unspezifische Adsorption von Proteinen an Glasgefäßen verringern sollen, zeigten zwar den gewünschten Effekt bei unbeschichtetem Glas, konnten jedoch nicht die positive Wirkung von HPG als Beschichtungsmaterial erzielen (vgl. **Abb. 2**).

### c) Adsorption das Antikörpers IclG1 in mg/m² an mit hochverzweigtem Polyglycerin (HPG(OH)) methylierten hochverzweigtem Polyglycerin (HPG(OMe)) und linearem Poly(methyl glycerin) (LPG(OMe)) beschichteten Glasgefäßen sowie an unbeschichteten Fiolax® Glasgefäßen bei unterschiedlicher Ionenstärke (170 mM, 22 mM), unterschiedlichen pH-Werten und nach Hitzesterilisation sowie Dampfdrucksterilisation im Verleich zu Monomethoxypolyethylen glycol (mPEG) beschichteten Glasgefäßen.

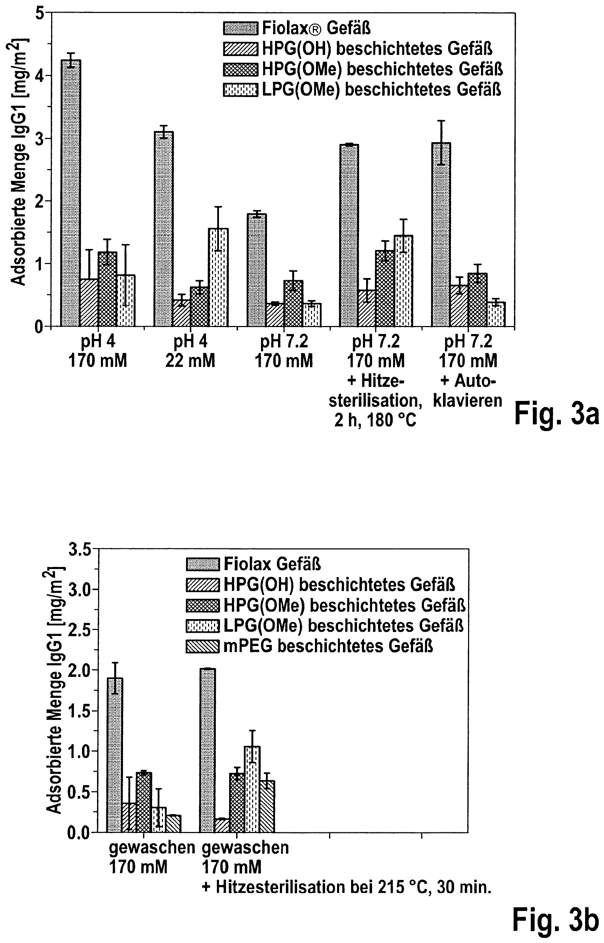

Die Sterilisation der beschichteten Glasgefäße wurde mittels standardisierter Sterilisationsverfahren, nämlich Hitzesterilisation (2 Stunden, 180°C oder 30 Minuten, 215°C) oder Dampfdrucksterilisation (15 Minuten bei 121 °C und 2 bar autoklaviert) durchgeführt. Die mit HPG(OH) modifizierten Gefäße zeigten kaum eine Änderung der Menge an adsorbiertem IgG1, wenn die Gefäße hitzesterilisiert wurden sowohl bei 180 °C als auch bei 215 °C (**vgl.** **Abb. 3a und 3b**). Im Gegensatz dazu zeigten Gefäße, die mit linearem Poly(methyl glycerin) (LPG(OMe)), hochverzweigtem Polyglycerin mit methylierten Hydroxylgruppen (HPG(OMe)) oder mPEG beschichtet waren, einen Anstieg der Proteinadsorption nach Hitzesterilisation im Vergleich zu den entsprechenden unsterilisierten Gefäßen. Im Vergleich zu unbeschichteten Gefäßen ist der Verlust an Protein durch Adsorption an die Gefäßwand jedoch selbst nach Hitzesterilisation trotz teilweisem thermischen Abbau der HPG(OMe) und LPG(OMe) Beschichtungen immer noch mindestens um 50% reduziert.

Dampfdruck-Sterilisation hatte nur eine geringe Auswirkung auf die Effektivität der polymeren bioinerten Beschichtung, so dass sämtliche Beschichtungen als autoklavierfest bezeichnet werden können.

### d) Adhäsion (cell number 10³/cm²) vier verschiedener Bakterienstämme auf erfindungsgemäß hydrophilen HPG(OH), LPG(OME) und LPG(OH)-beschichteten Glasoberflächen im Vergleich zu unbeschichtetem bzw. hydrophob beschichtetem Glas (HDS).

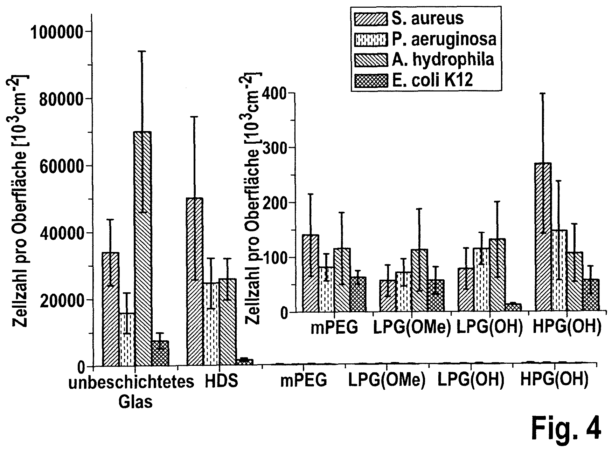

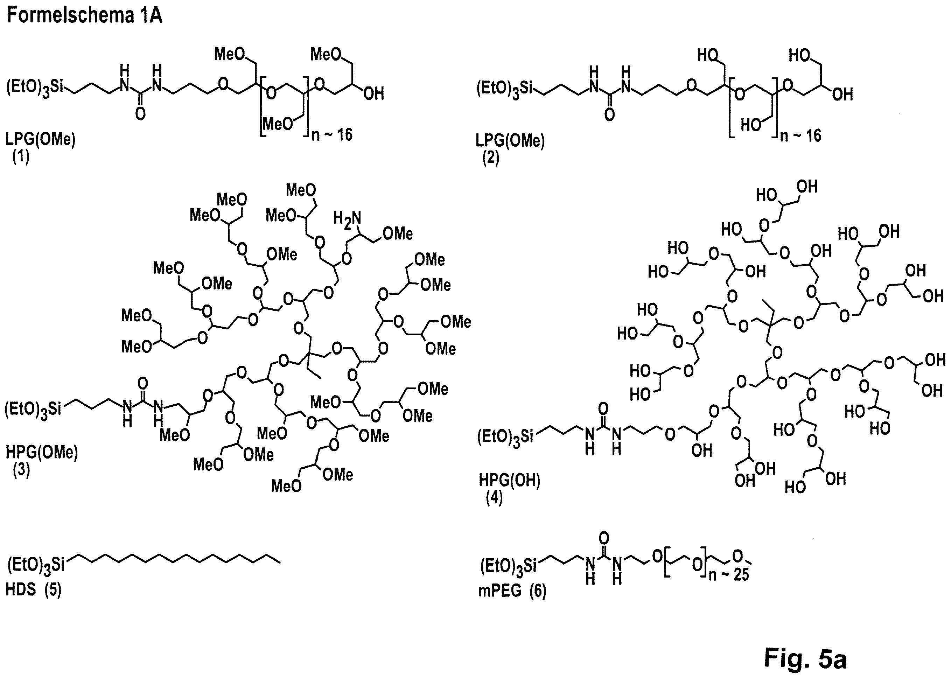

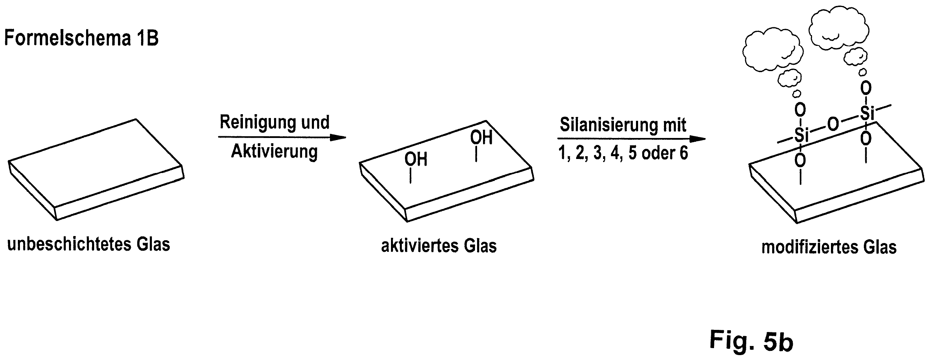

Sowohl gram-positive als auch gram-negative Prokaryonten wie S. Aureus, P. Aeruginosa, A. Hydrophila und E. Coli K12 zeigen eine stark verringerte Adhäsionsneigung auf derartig beschichteten Glasoberflächen im Vergleich zu unbeschichteten bzw. hydrophob beschichteten Glasoberflächen (HDS) (**vgl.** **Abb. 4**). Solch eine gehinderte Adhäsion von Bakterien auf Polyglycerin-beschichteten Gefäßen birgt auch den potenziellen Nutzen, dass wenn derartig beschichtete Gefäße zur Lagerung und Verpackung von "Biopharmazeutika" verwendet werden, dadurch das potentielle Risiko einer bakteriellen Kontamination der Wirkstoffe über die standardmäßig angewendete Sterilisation hinaus reduziert werden kann.

### Beispiel 5:

### Bestimmung der statischen Wasserkontaktwinkel

Statische Kontaktwinkelmessungen wurden bei 20 °C mit MilliQ Wasser auf beschichteten und nicht-beschichteten Objektträgern durchgeführt wobei die sogenannte "sessile drop" Methode verwendet wurde. Die angegebenen Kontaktwinkel sind der Durchschnitt aus 5 unabhängigen Messungen mit einem Tropfenvolumen von je 2 µL auf unterschiedlichen Orten auf der zu untersuchenden Oberfläche wobei ein Young-Laplace Fitting zur Auswertung der Daten verwendet wurde. Die Messungen wurden mit einem Goniometer der Firma Dataphysics Contact Angle System OCA durchgeführt und die erhaltenen Bilder wurden digital mit der Software SCA 20 (Dataphysics), version 3.12.11 analysiert. Je niedriger der Wasserkontaktwinkel ist desto hydrophiler ist die Oberfläche bzw. die Oberflächenbeschichtung. Somit ist der Wasserkontaktwinkel bzw deren Änderung nach erfolgter Beschichtung ein einfacher Nachweis für die erfolgreiche Modifizierung der Oberfläche. Tabelle 1 fasst die Wasserkontaktwinkel verschiedener Polyglycerin-Beschichtungen zusammen.

**Tabelle 1**

| Verbindung | Θ_{static} [°] |
|---|---|
| LPG(OMe) (**1**) | 49.5 ± 0.7 |
| LPG(OH) (**2**) | 27.2 ± 0.8 |
| HPG(OH) (**4**) | 21.2 ± 1.1 |
| HDS (**5**) | 107.7 ± 0.8 |
| unbeschichtetes Glas | 45.8 ± 0.8 |

## Patentansprüche

1. Verfahren zum Beschichten von Glasoberflächen, insbesondere von Glasgefäßen für Biomoleküle und biologische Materialien, **dadurch gekennzeichnet, dass** die Glasoberfläche aktiviert wird und auf diese aktivierte Glasoberfläche ein Silylmodifiziertes Polyglycerol gegeben wird, wobei das modifizierte Polyglycerol so strukturiert ist, dass der oberflächenreaktive Silyl-Linker, der ausgewählt ist aus Trialkoxysilyl, Dialkoxyalkylsilyl oder Monoalkoxydialkylsilyl, über eine Harnstoffbindung an das Polyglycerol gekoppelt vorliegt, und über den Silyl-Linker eine kovalent gebundene Schicht an der Glasoberfläche gebildet wird, wobei die Beschichtung der aktivierten Glasoberfläche mit dem Silyl-modifizierten Polyglycerol in einem polaren protischen Lösungsmittel oder Lösungsmittelgemisch erfolgt.

2. Verfahren nach Anspruch 1, **dadurch gekennzeichnet, dass** die zur Beschichtung verwendeten oberflächenreaktiven Silyl-modifizierten Polyglycerole aus entsprechenden Mono-amin-funktionalisierten Precursor-Polyglycerolen durch Umsetzung mit den entsprechenden Silyl-propylisocyanaten synthetisiert werden.

3. Verfahren nach Anspruch 1 oder 2, **dadurch gekennzeichnet, dass** als Polyglycerole hochverzweigte Polyglycerine mit freien Hydroxylgruppen (HPG(OH)) oder mit methylierten Hydroxylgruppen (HPG(OMe)), lineare Polymethylglycerine (LPG(OMe)) oder lineare Polyglycerolen (LPG(OH)) verwendet werden.

4. Verfahren nach einem der Ansprüche 1 bis 3, **dadurch gekennzeichnet**, das als Polyglycerole hochverzweigte Polyglycerine mit freien Hydroxylgruppen (HPG(OH)) verwendet werden.

5. Verfahren nach einem der Ansprüche 1 bis 4, **dadurch gekennzeichnet, dass** als Silyl-Linker ein Triethoxysilyl-Rest verwendet wird.

6. Verfahren nach einem der Ansprüche 1 bis 5, **dadurch gekennzeichnet, dass** die Aktivierung der Glasoberflächen durch eine Piranha-Behandlung, Behandlung mit stark alkalischer Lösung oder Plasmaaktivierung erfolgt.

7. Verfahren nach einem der Ansprüche 1 bis 6, **dadurch gekennzeichnet, dass** als polares protisches Lösungsmittel oder Lösungsmittelgemisch ein Alkohol verwendet wird.

8. Verfahren nach einem der Ansprüche 1 bis 7, **dadurch gekennzeichnet, dass** die Glasoberflächen bei Temperaturen von 40 bis 100 °C beschichtet werden, nichtgebundene Reste entfernt werden und zur finalen Quervernetzung eine Erwärmung auf Temperaturen von 80 bis 120°C erfolgt.

9. Glasgefäße, einschließlich Glasgerätschaften und mikrofluidische Kanäle, für Biomoleküle und biologische Materialien, wobei die Oberfläche, die zur Aufnahme der biologischen Materialien dient, mit einer Antihaftschicht für Biomoleküle versehen ist, die eine Autoklavierung und/oder eine Hitzesterilisation übersteht, wobei die Beschichtung eine Silyl-modifizierte Polyglycerolbeschichtung darstellt, in der der Silyl-Linker, der ausgewählt ist aus Trialkoxysilyl, Dialkoxyalkylsilyl oder Monoalkoxydialkylsilyl, über eine Harnstoffbindung an das Polyglycerol gekoppelt vorliegt, und die Beschichtung über den Silyl-Linker kovalent an der Glasoberfläche gebunden ist.

10. Glasgefäß nach Anspruch 9, **dadurch gekennzeichnet, dass** eine Silyl-modifizierte Polyglycerolbeschichtung basierend auf hochverzweigten Polyglycerinen mit freien Hydroxylgruppen (HPG(OH)) vorliegt, vorzugsweise eine Triethoxysilyl-modifizierte Polyglycerolbeschichtung.

11. Glasgefäß nach Anspruch 9 oder 10, **dadurch gekennzeichnet, dass** die Silyl-modifizierte Polyglycerolbeschichtung einen Kontaktwinkel zu Wasser zwischen 20 und 50° besitzt.

## Claims

1. A method for coating glass surfaces, in particular glass vessels for biomolecules and biological materials, **characterized in that** the glass surface is activated and a silyl-modified polyglycerol is added to this activated glass surface, wherein the modified polyglycerol is structured in such a way that the surface reactive silyl linker, which is selected from trialkoxysilyl, dialkoxyalkylsilyl or monoalkoxydialkylsilyl, is coupled via a urea bond to the polyglycerol, and via the silyl linker, a covalently bonded layer is formed on the glass surface, wherein the coating of the activated glass surface with the silyl-modified polyglycerol is conducted in a polar protic solvent or solvent mixture.

2. The method according to claim 1, **characterized in that** the surface-reactive silyl-modified polyglycerols used for coating are synthesised from corresponding mono-amine functionalised precursor polyglycerols through reaction with the corresponding silyl propylisocyanates.

3. The method according to claim 1 or 2, **characterized in that** hyperbranched polyglycerines with free hydroxyl groups (HPG(OH)) or with methylated hydroxyl groups (HPG(OMe)), linear polymethyl glycerines (LPG(OMe)) or linear polyglycerols (LPG(OH)) are used as polyglycerols.

4. The method according to any one of claims 1 to 3, **characterized in that** hyperbranched polyglycerines with free hydroxyl groups (HPG(OH)) are used as polyglycerols.

5. The method according to any one of claims 1 to 4, **characterized in that** a triethoxysilyl residue is used as a silyl linker.

6. The method according to any one of claims 1 to 5, **characterized in that** the glass surfaces are activated using a piranha treatment, treatment with strongly alkaline solution or plasma activation.

7. The method according to any one of claims 1 to 6, **characterized in that** an alcohol is used as a polar protic solvent or solvent mixture.

8. The method according to any one of claims 1 to 7, **characterized in that** the glass surfaces are coated at temperatures of 40 to 100 °C, non-bonded residues are removed and for the final cross-linking, heating is conducted up to temperatures of 80 to 120 °C.

9. Glass vessels, including glass appliances and microfluidic channels, for biomolecules and biological materials, wherein the surface that acts to hold the biological materials is equipped with an anti-adhesive layer for biomolecules, which withstands autoclaving and/or heat sterilisation, wherein the coating is a silyl-modified polyglycerol coating, in which the silyl linker, which is selected from trialkoxysilyl, dialkoxyalkylsilyl or monoalkoxydialkylsilyl, is coupled via a urea bond to the polyglycerol and the coating is bonded covalently on the glass surface via the silyl linker.

10. The glass vessel according to claim 9, **characterized in that** a silyl-modified polyglycerol coating based on hyperbranched polyglycerines with free hydroxyl groups (HPG(OH)) is present, preferably a triethoxysilyl-modified polyglycerol coating.

11. The glass vessel according to claim 9 or 10, **characterized in that** the silyl-modified polyglycerol coating has a contact angle to the water of between 20 and 50°.

## Revendications

1. Procédé de revêtement de surfaces en verre, en particulier de récipients en verre pour biomolécules et matières biologiques, **caractérisé en ce que** la surface en verre est activée et un polyglycérol modifié par silyle est appliqué à la surface en verre, le polyglycérol modifié étant structuré de telle sorte que l'agent de couplage silylé réactif en surface, lequel est sélectionné parmi le groupe se composant de trialcoxysilyle, dialcoxyalkylsilyle ou monoalcoxydialkylsilyle, est couplé au polyglycérol par une liaison urée, et qu'une couche liée de façon covalente est formée par l'agent de couplage silylé sur la surface en verre, le revêtement de la surface en verre activée avec le polyglycérol modifié par silyle étant effectué dans un solvant protique polaire ou un mélange de solvants.

2. Procédé selon la revendication 1, **caractérisé en ce que** les polyglycérols modifiés par silyle réactifs en surface utilisés pour le revêtement sont synthétisés à partir de polyglycérols précurseurs fonctionnalisés par monoamine correspondants, par conversion avec les silyle-propylisocyanates correspondants.

3. Procédé selon la revendication 1 ou 2, **caractérisé en ce que** des polyglycérines hautement ramifiées avec groupes hydroxyles libres (HPG(OH)) ou avec groupes hydroxyles méthylés (HPG(OMe)), des polyméthylglycérines linéaires (LPG(OMe)) ou des polyglycérols linéaires (LPG(OH)) sont utilisés comme polyglycérols.

4. Procédé selon l'une des revendications 1 à 3, **caractérisé en ce que** des polyglycérines hautement ramifiées avec groupes hydroxyles libres (HPG(OH)) sont utilisées comme polyglycérols.

5. Procédé selon l'une des revendications 1 à 4, **caractérisé en ce qu'**un résidu de triéthoxysilyle est utilisé comme agent de couplage silylé.

6. Procédé selon l'une des revendications 1 à 5, **caractérisé en ce que** l'activation des surfaces en verre est effectuée par un traitement piranha, un traitement avec solution fortement alcaline ou une activation plasma.

7. Procédé selon l'une des revendications 1 à 6, **caractérisé en ce qu'**un alcool est utilisé comme solvant protique polaire ou mélange de solvants.

8. Procédé selon l'une des revendications 1 à 7, **caractérisé en ce que** les surfaces en verre sont revêtues à des températures de 40 à 100 °C, **en ce que** les résidus non liés sont éliminés et **en ce qu'**un chauffage à des températures de 80 à 120 °C est effectué pour le pontage des chaînes final.

9. Récipients en verre, y compris équipement en verre et canaux microfluidiques, pour biomolécules et matières biologiques, la surface qui sert à la réception des matières biologiques étant munie d'une couche antiadhésive pour biomolécules, résistant à un autoclavage et/ou une stérilisation à la chaleur, le revêtement représentant un revêtement de polyglycérol modifié par silyle, dans laquelle l'agent de couplage silylé qui est sélectionné parmi le groupe se composant de trialcoxysilyle, dialcoxyalkylsilyle ou monoalcoxydialkylsilyle est couplé au polyglycérol par une liaison urée, et le revêtement étant lié à la surface en verre de façon covalente par l'agent de couplage silylé.

10. Récipient en verre selon la revendication 9, **caractérisé en ce qu'**un revêtement de polyglycérol modifié par silyle basé sur des polyglycérines hautement ramifiées avec groupes hydroxyles libres (HPG(OH)) est existant, de préférence un revêtement de polyglycérol modifié par triéthoxysilyle.

11. Récipient en verre selon la revendication 9 ou 10, **caractérisé en ce que** le revêtement de polyglycérol modifié par silyle possède un angle de contact avec l'eau entre 20° et 50°.
